# EUROPEAN PATENT APPLICATION

(11) **EP 2 372 127 A1**
(43) Date of publication of application: **05.10.2011**
(21) Application number: 09834971.5
(22) Date of filing: 24.12.2009
(51) Int. Cl.: F02B 41/10, B63H 21/14, B63J 3/02, F01K 23/02, F02G 5/02

(54) **CONTROL DEVICE FOR WASTE HEAT RECOVERY SYSTEM**

(30) Priority: 26.12.2008 JP 2008334135
(71) Applicant: Mitsubishi Heavy Industries, Ltd., Tokyo 108-8215 (JP)
(72) Inventor: SAKAGUCHI, Yusuke, Nagasaki-shi Nagasaki 851-0392 (JP); ICHIKI, Yoshihiro, Nagasaki-shi Nagasaki 850-8610 (JP); KANABOSHI, Takayuki, Nagasaki-shi Nagasaki 850-8610 (JP); OHTA, Yuji, Nagasaki-shi Nagasaki 851-0392 (JP); KAGIMOTO, Yoshimi, Nagasaki-shi Nagasaki 851-0392 (JP)
(74) Representative: Henkel, Breuer & Partner
(86) International application number: PCT/JP2009/071486
(87) International publication number: WO 2010/074173

(57) **Abstract**

Disclosed is a control device for a waste heat recovery system which enables improvement in the responsiveness of the output control for a power turbine and a steam turbine with respect to sudden changes in the inboard load. The control device for a waste heat recovery system is equipped with: a power turbine that provides drive using engine exhaust gas and a steam turbine that provides drive using steam generated with an engine exhaust gas economizer, and is equipped with a power turbine control means which controls the output of the power turbine and a steam turbine control means which controls the output of the steam turbine, and both of which drive an electrical generator by means of the power turbine and the steam turbine. The power turbine control means is equipped with: a power turbine feedback control means which calculates a control valve operation amount based on the deviation between a power turbine target value a;nd the actual power turbine output; and a power turbine feed-forward control means which extracts a control valve operation amount from a power turbine degree-of-opening command map wherein the relationship between the engine load, the power turbine output target value calculated from the engine load, and the control valve operation amount has been preset. The power turbine control means sets the degree of opening of the control valve by adding the operation amount from the feed-forward control means and the operation amount from the feedback control means.

## Description

### BACKGROUND OF THE INVENTION

### Field of the Invention

The present invention relates to a control device for an exhaust heat recovery system for vessels, in particular, a control device for an exhaust heat recovery system which sets the opening of a control valve by calculation of a PID controller and a deviation of the rotation speed of a power turbine.

### Description of the Related Art

As a exhaust heat recovery system for vessels, there is a power generation system wherein a steam turbine is driven by performing heat exchange with exhaust gas discharged from a main engine with use of a exhaust gas economizer which utilizes the exhaust gas from the engine and a system wherein the power is generated by rotating a shaft generator by engine output so as to partially compensate for electric load within the vessel. These types of systems have been proposed in view of saving power in the vessel. For instance, Patent Document 1 (JP2007-001339A) discloses the system wherein the exhaust gas from the engine is utilized to drive the power turbine and to partially compensate for the electric load within the vessel.

In the exhaust heat recovery system equipped with the power turbine, the power is distributed amongst a steam turbine, a power turbine, and a shaft generator depending on the engine load. The power generation by the power turbine is usually controlled by a valve such as ON/OFF valve. In such a case, when there is a chance that turbine trip occurs due to increased load in the vessel, the steam flow is completely shut off by closing the valve or bypassing the flow, and thus it is impossible to control the flow amount of the steam precisely.

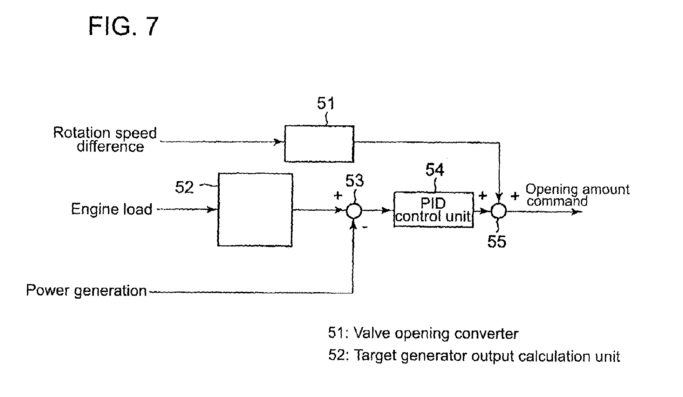

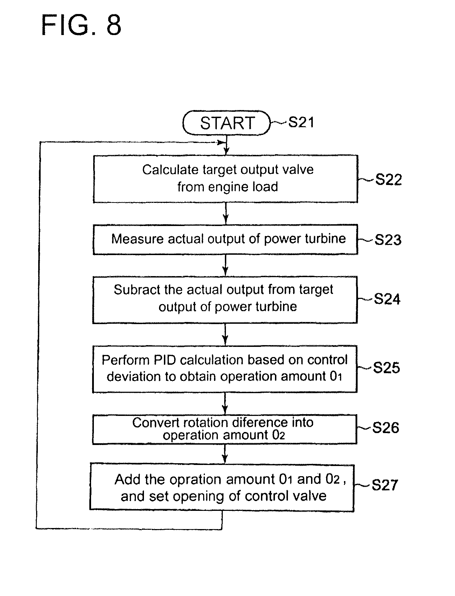

FIG.7 is a block diagram illustrating a control logic performed in a conventional exhaust heat recovery system. FIG.8 is a flow chart of the control logic in relation to FIG.7. The control logic of FIG.7 starts in a step S21, and a power generation output command computer 52 computes a target output value of the power turbine from the engine load in a step S22. An actual output value is measured in a step S23, and a subtractor 53 calculates the difference between the target output value and the actual output value of the power turbine in a step S24. Then, a PID controller 54 performs PID calculation based on a control deviation so as to obtain an operation amount O₁.

Next, a valve opening converter 51 converts an output signal of the feedback control into an operation amount O₂ based on a rotation difference between a target rotation and an actual rotation of the power turbine in a step S26. Then, an adder 55 adds the operation amount O₁ and the operation amount O₂ in a step S27 so as to determine the opening amount of the control valve. After the step S27, the process returns to the step S22.
In this manner, the opening amount of the control valve in the power turbine is set by performing the feedback control.

Moreover, Patent Document 2 (JP3804693B) proposes an invention to control the opening amount of the valve. According to Patent Document 2, a circulation water temperature sensor of load side is arranged on a downstream side of exhaust heat recovery point on a circulation pip of the load side and measures the temperature of circulation water of the load side; an exhaust heat recovery detection means outputs a first heat discharge signal when the temperature of the load side circulation water having been detected by the circulation water temperature sensor is not less than a first set temperature of the load side circulation water by comparing the measured temperature and the first set temperature of the load side circulation water; a flow state detection means is arranged on the load side circulation pipe and detects the flow state of the load side circulation water is normal or abnormal and outputs a second heat discharge signal depending when detecting the abnormal flow; a hold means outputs a heat discharge signal based on the second discharge signal to a point at which a temperature of cooling water measured by a cooling water temperature sensor becomes lower than a second set temperature; a feedforward side controller outputs a control output to set the opening of a discharge amount regulator to a set amount which is set in advance and smaller than the opening amount of the valve which allows a rated operation of the engine and allows the flow of the cooling water for the amount that is supplied to a heat exchanger when the there is no demand for the discharge heat; and a feedback side controller outputs a control output based on the temperature measured by the cooling water temperature sensor so as to control the regulator to increase the discharge heat as the measured temperature gets higher. The control output from the feedforward side controller is added to the control output from the feedback side controller so as to calculate a control output for controlling the discharge heat controller.

The exhaust heat recovery system disclosed in Patent Document 2 was made in view of prevent the generation of an overshoot resulting from a sudden variation of the exhaust heat recovery amount.
However, A rapid decline in the load in the vessel generates surplus power and thus it is necessary to immediately reduce the output of the power turbine. In such case, a fluctuation of frequency may be intensified depending on the responsiveness of controlling the output of the power turbine.
Similarly in the power generation of the steam turbine, a rapid decline in the load in the vessel generates surplus power. To take measure against this, it is necessary to control the flow amount at the valve so as to reduce the output of the steam turbine. In such case, a fluctuation of frequency may be intensified depending on the responsiveness of controlling the output of steam turbine.

As described above, when there is a rapid decline in the load in the vessel, it is necessary to consider the fluctuation of the frequency. However, Patent Document 2 discloses no solution thereto. Further, in order to control the output of the power turbine or the steam turbine due to the rapid decline in the load in the vessel, the time that takes to stabilize the power supply depends on the responsive speed.

### [Related Art Document]

[PATENT DOCUMENT 1] JP2007-1339A
[PATENT DOCUMENT 2] JP3804693B

### SUMMARY OF THE INVENTION

In view of the problem above, an object of the present invention is to improve the responsiveness of controlling the output of the power turbine and the steam turbine in response to the rapid change of the load within the vessel.

To solve the above issues, the present invention proposes a control device for an exhaust heat recovery system which comprises a power turbine which is driven with use of exhaust gas of an engine, a steam turbine which is driven with use of steam generated by an exhaust gas economizer using the exhaust gas of the engine, and a power generator which is driven by the power turbine and the steam turbine, the control device comprising: a first control valve mechanism which includes at least one control valve arranged on an upstream side of the power turbine and controlling output value of the power turbine by regulating a flow of the exhaust gas; a second control valve mechanism which includes at least one control valve arranged on an upstream side of the steam turbine and controlling output value of the steam turbine; a power turbine controller which controls a total operation amount of the first control valve mechanism; and a steam turbine controller which controls a total operation amount of the second control valve mechanism, wherein the power turbine controller includes a power turbine feedback control unit which calculates a difference between a target output value of the power turbine calculated from an engine load and an actual output value of the power turbine with use of a PID controller so as to compute a first operation amount of the first control valve mechanism, and a power turbine feedforward control unit which extracts a second operation amount of the first control valve mechanism from a preset opening-amount command map for the power turbine which indicates a relationship among the engine load, the target output value of the power turbine calculated from the engine load and an operation amount of the first control valve mechanism, wherein the power turbine controller calculates the total operation amount of the first control valve mechanism by adding the first operation amount obtained from the power turbine feedforward control unit and the second operation amount obtained from the power turbine feedback control unit.

According to the invention, the preset opening-amount command map for the power turbine which indicates the relationship among the engine load, the target output value of the power turbine calculated from the engine load and an operation amount of the first control valve mechanism; the feedback control unit obtains the first operation amount of the first control valve mechanism from the preset opening-amount command map; and the power turbine controller calculates the total operation amount of the first control valve mechanism by adding the first operation obtained form the power turbine feedforward control unit and the second operation amount obtained from the power turbine feedback control unit. As a result, the responsiveness of controlling the output of the power turbine is improved and the fluctuation of the frequency is reduced.
Therefore, even when the load within the vessel rapidly decreases, the responsiveness of controlling the output of the power turbine can be improved.

It is preferable in the present invention that the total operation amount of the first control valve mechanism is an opening amount of a flow control valve for controlling an inflow of the exhaust gas to the power turbine. It is also preferable that the total operation amount of the first control valve mechanism is an opening amount of a bypass valve for controlling a flow of the exhaust gas bypassing the power turbine.
In the case of controlling the opening amount of the flow control valve, the inflow of the exhaust gas to the power turbine is directly controlled and thus the output of the power turbine can be controlled efficiently and the inflow can be shut out completely. As a result, the power generation of the power turbine can be reduced instantaneously when the load within the vessel decreases.
Meanwhile, in the case of controlling the opening amount of the bypass valve, the inflow of the exhaust gas to the power turbine can be indirectly controlled by controlling the flow of the exhaust gas bypassing the power turbine. As a result, the output of the power turbine can be precisely controlled.

Further, it is also preferable that the steam turbine controller comprises a steam turbine feedback control unit which calculates a difference between a target output value of the steam turbine calculated from the engine load and an actual output value of the steam turbine with use of a PID controller so as to compute a first operation amount of the second control valve mechanism, and a steam turbine feedforward control unit which extracts a second operation amount of the second control valve mechanism from a preset opening-amount command map for the steam turbine which has a relationship among the engine load, the target output value of the steam turbine calculated from the engine load and an operation amount of the second control valve mechanism, and that the steam turbine controller calculates the total operation amount of the second control valve mechanism by adding the first operation amount obtained from the steam turbine feedforward control unit and the second operation amount obtained from the steam turbine feedback.

By this, in the manner similar to the power turbine, the first operation amount obtained from the steam turbine feedforward control unit is added to the second operation amount obtained from the steam turbine feedback so as to obtain the total operation amount of the second control valve mechanism, thereby improving the responsiveness of controlling the output of the steam turbine and also reducing the fluctuation of the frequency. As a result, the responsiveness of controlling the output of the steam turbine can be improved even when the load within the vessel decreases.

To control the output of the steam turbine, the total operation amount of the second control valve mechanism may be an opening amount of a flow control valve for controlling an inflow of the exhaust gas to the steam turbine or an opening amount of a bypass valve for controlling a flow of the exhaust gas bypassing the steam turbine.
In the manner similar to controlling the output of the power turbine, in the case of controlling the opening amount of the flow control valve, the inflow of the exhaust gas to the steam turbine can be directly controlled and thus the output of the steam turbine can be efficiently controlled and the flow can be completely shut out. As a result, the power generation of the steam turbine can be reduced instantaneously when the load within the vessel decreases.
Meanwhile, in the case of controlling the opening amount of the bypass valve, the inflow of the exhaust gas to the steam turbine can be indirectly controlled by controlling the flow of the exhaust gas bypassing the steam turbine. As a result, the output of the steam turbine can be precisely controlled.

Furthermore, in the present invention, the control device preferably comprises a power turbine target output value correcting unit for correcting the target output value of the power turbine in accordance with a change of a steam turbine load so as to obtain a corrected target output value of the power turbine, wherein the power turbine feedback control unit and the power turbine feedforward control unit perform calculation based on the corrected target output value of the power turbine

By this, the power turbine and the steam turbine can be controlled in conjunction with each other instead of independently.
That is, steam-type units are slower in response and thus, the steam turbine is operated as a master unit and the power turbine is operated as a slave unit to set the operation amount.
Specifically, the power turbine target output value correcting unit corrects the target output value of the power turbine in accordance with the change of the steam turbine load being monitored.
When the power demand within the vessel decreases sharply, it is necessary to reduce both the load of the steam turbine and the load of the power turbine. However, the responsiveness of the steam-type units is low and thus the output of the steam turbine decreases following the decline of the output of the power turbine. In such an occasion, as it is necessary to ensure the minimum electricity needed within the vessel, the target output of the power turbine should be increased in response to the output (load) of the steam turbine, i.e. the reduction of the output of the steam turbine.
In this manner, the target output of the power turbine is corrected while the load state of the steam turbine is monitored. As a result, to respond to the decline in the load within the vessel, both the power turbine and the steam turbine are controlled in conjunction with each other, instead of controlling the output of the power turbine disproportionately.

Furthermore, it is also preferable that the power turbine target output value correcting device calculates the corrected target output value of the power turbine from the engine load and the steam turbine load, based on a preset correction opening-amount command map for the power turbine which indicates a relationship among the steam turbine load, the engine load and the corrected target output value of the power turbine. In this manner, the corrected target output value of the power turbine can be easily obtained by using the preset correction opening-amount command map for the power turbine.

According to the present invention, it is possible to provide the control device for the exhaust heat recovery system, that can improve the responsiveness of controlling the output of the power turbine and the steam turbine in response to the rapid change of the load within the vessel.

### BRIEF DESCRIPTION OF THE DRAWINGS

[FIG.1] A configuration diagram illustrating schematically an exhaust heat recovery system and a general structure of a control device in relation to the present invention.
[FIG.2] A block diagram showing a control logic performed in the exhaust heat recovery system of a first preferred embodiment.
[FIG.3] A flow chart showing the control logic of the first preferred embodiment.
[FIG.4] Maps with an opening amount of a control valve B of a first control valve mechanism on the x-axis.
[FIG.5] A block diagram showing a control logic performed in the exhaust heat recovery system of a second preferred embodiment.
[FIG.6] A flow chart showing the control logic of the second preferred embodiment.
[FIG.7] A block diagram showing a control logic performed in a conventional exhaust heat recovery system.
[FIG.8] A flow chart showing the control logic of the conventional case in relation to FIG.7.

### DETAILED DESCRIPTION OF THE PREFERRED EMBODIMENTS

A preferred embodiment of the present invention will now be described in detail with reference to the accompanying drawings. It is intended, however, that unless particularly specified, dimensions, materials, shape, its relative positions and the like shall be interpreted as illustrative only and not limitative of the scope of the present.

### [FIRST PREFERRED EMBODIMENT]

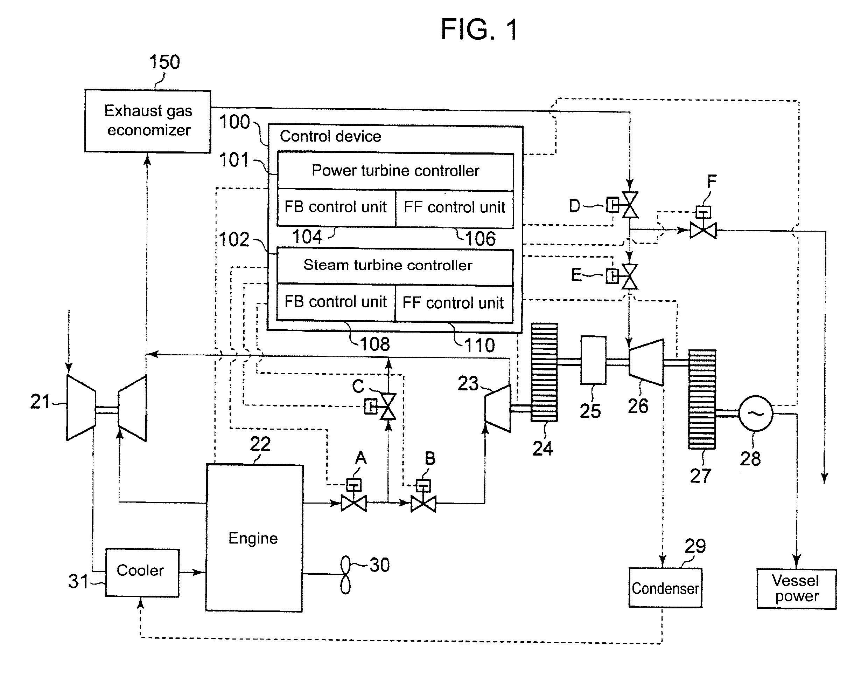

First, a configuration of the exhaust heat recovery system in relation to the present invention will be explained in reference to FIG.1. FIG.1 shows an engine 22 for propelling the vessel, a propeller being rotated by the output of the engine 22, a supercharger 21 for compressing the air to be supplied to the engine 22, a cooler 31 for cooling the air from the supercharger 21, a power turbine (gas turbine) 23, a steam turbine 26, and a generator 28.
The power turbine 23 is connected to the steam turbine 26 via a decelerator 24 and the steam turbine 26 is connected to the generator 28 via another decelerator 27. The decelerators 24 and 27 are different in size and the number of gear teeth. A rotation shaft connecting the power turbine 23 and the steam turbine 26, and a rotation shaft connecting the steam turbine 26 and the generator 28 are connected via a clutch 25 such that rotative power is transmitted or cut off.

Further, an exhaust gas economizer 150 is provided. The exhaust gas discharged from the engine 22 is supplied to the exhaust gas economizer 150 via the supercharger 21 or via both the supercharger 21 and the power turbine 23. The steam generated in the exhaust gas economizer 150 is introduced to the steam turbine 26 so as to actuate the steam turbine 26 and then to rotate the generator 28 with the power of the power turbine 23. The steam returns to the water in a condenser 29 arranged on a downstream side of the steam turbine 57. Subsequently, the water is heated by the heat of the cooler 31 and the heat used for cooling walls of the engine 22 and then supplied to the exhaust gas economizer 150 in which the water evaporates, thereby generating the steam.

The power generation by the power turbine 23 is controlled by the first valve mechanism formed by control valves A, B, and C. The power generation by the steam turbine 26 is controlled by the second valve mechanism formed by control valves D, E, and F. In the first preferred embodiment, the first control valve mechanism is explained from a perspective of controlling the opening of the control valve in such a state that the control valves A and C are fully-open or open with a certain amount and the second control valve mechanism is explained from a perspective of controlling the opening of the control valve E in such a state that the control valves D and F are fully-open or open with a certain amount.

A control device of the control device 1000 of the exhaust heat recovery system comprises a power turbine controller 101 for controlling which controls a total operation amount of the first control valve mechanism formed by the control valves A, B, and C, and a steam turbine controller 102 which controls a total operation amount of the second control valve mechanism formed by the control valves D, E, and F.

Further, the power turbine controller 101 includes a power turbine feedback control unit 104 which calculates a difference between a target output value of the power turbine calculated from an engine load and an actual output value of the power turbine with use of a PID controller so as to compute a first operation amount of the first control valve mechanism, and a power turbine feedforward control unit 106 which extracts a second operation amount of the first control valve mechanism from a preset opening-amount command map 105 for the power turbine which indicates a relationship among the engine load, the target output value of the power turbine calculated from the engine load and an operation amount of the first control valve mechanism.

Furthermore, the steam turbine controller 102 comprises a steam turbine feedback control unit 108 which calculates a difference between a target output value of the steam turbine calculated from the engine load and an actual output value of the steam turbine with use of a PID controller so as to compute a first operation amount of the second control valve mechanism, and a steam turbine feedforward control unit 110 which extracts a second operation amount of the second control valve mechanism from a preset opening-amount command map 109 for the steam turbine which has a relationship among the engine load, the target output value of the steam turbine calculated from the engine load and an operation amount of the second control valve mechanism.

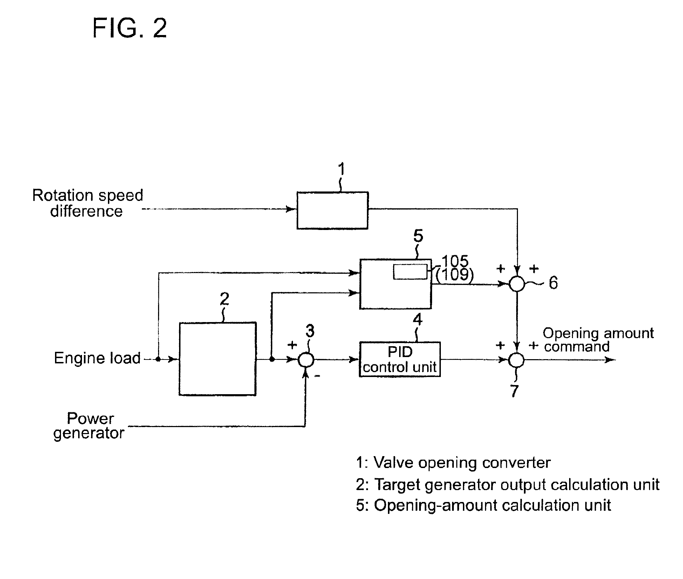

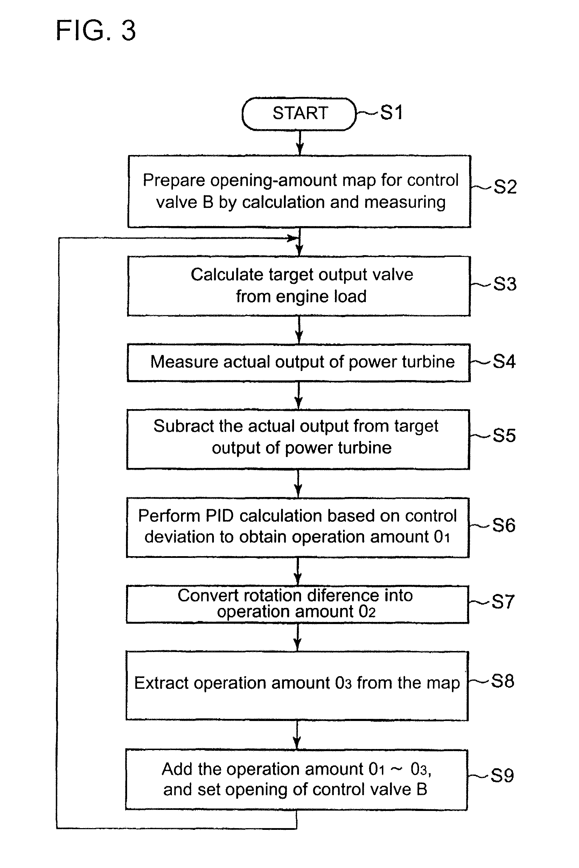

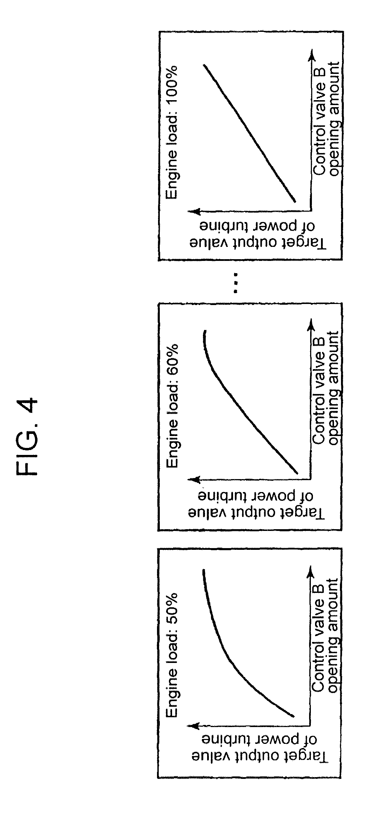

A control logic performed by the control device in the exhaust heat recovery system is described in reference to FIG.2 and FIG.3. FIG.2 is a block diagram showing a control logic performed in the exhaust heat recovery system of a first preferred embodiment. FIG.3 is a flow chart showing the control logic of the first preferred embodiment. FIG.2 and FIG.3 show a case in which the power generation of the power turbine 26 is controlled by the control valve B of the first control valve mechanism.
In the control logic of FIG.2, the process starts in a step S1, and an opening-amount map of the control valve B is prepared by calculating or measuring such a opening amount of the control valve B that obtains the desired output of the power turbine for each load of the engine in a step S2. FIG.4 shows opening-amount maps (opening-amount command map for the power turbine) 105 of the control valve B.

The opening-amount map of the control valve is determined by a target output value of the power turbine calculated from an engine load and the engine load. The target output value of the power turbine is set in response to the engine load. And the map can be used so that the opening amount of the control valve B can be adjusted with respect to the output. FIG.4 shows three of the control valve opening-amount maps in the case of the engine load being 50%, 60%, and 100%. When the engine load is below 50%, the energy of the entire exhaust gas from the engine decreases.
In a step S3, a target generator output calculation unit 2 (ref. FIG.2) calculates the target output value for the power turbine from the engine load. In a step S4, the actual output value of the power turbine is measured. In a step S5, a subtractor 3 (ref. FIG.2) calculates a difference between the target output value of the power turbine and the actual output value of the power turbine. In a step S6, a PID control unit 4 (ref. FIG.2) performs PID calculation based on the difference so as to obtain an operation amount O₁.

In a step S7, a valve opening converter 1 (ref. FIG.2) converts an output signal of the feedback control into an operation amount O₂ based on a rotation difference between a target rotation and an actual rotation of the power turbine. In a step S8, an opening-amount calculation unit 5 (ref. FIG.2) extracts an operation amount O₃ to achieve the target output value of the power turbine from the opening-amount command map 105 of the control valve B having been prepared in the step S1. In a step S9, an adder 6 adds the operation amount O₂ and the operation amount O₃ and another adder 7 further adds the operation amount O₁ so as to determine the opening amount of the control valve B. After completing the step S9, the process returns to the step S2. In this manner, the opening-amount map indicating the relationship between the engine load and the target output of the power turbine is generated, and the opening amount command is generated by performing the above feedforward control.

Therefore, the opening-amount command value of the control valve B for the power turbine 23 is set as a total operation amount obtained by adding the operation amount Os obtained in the feedforward control to the operations amount O1 and O2 obtained in the feedback control. By further adding the operation amount 3 obtained in the feedforward control, the responsiveness of controlling the output of the power turbine is improved and the fluctuation of the electric frequency is reduced.

Further, as for the steam turbine control, the steam turbine controller 102 performs the control process in the same way as the power turbine control.
Specifically, the flow chart of FIG.3 may be interpreted as follow for the steam turbine control. The process starts in the step S1, and an opening-amount map 109 of the control valve E is prepared by calculating or measuring such a opening amount of the control valve E that obtains the desired output of the steam turbine for each load of the engine in the step S2. In this case, the control valve E is equivalent of the control valve B of the previous case and the prepared opening-amount map (opening-amount command map for the steam turbine) 109 are equivalent of the opening-amount maps 105 for the power turbine
FIG.4 shows opening-amount maps (opening-amount command map for the power turbine) 105 of the control valve B of the previous case.

In the step S3, the target output value of the steam turbine is obtained in the same manner as calculating the target output value of the power turbine. In the step S4, the actual output value of the steam turbine is measured. In the step S5, the subtractor 3 calculates a difference between the target output value of the steam turbine and the actual output value of the steam turbine. In the step S6, the PID control unit 4 performs PID calculation based on the difference so as to obtain an operation amount O₁'. In the step S7, the valve opening converter 1 converts an output signal of the feedback control into an operation amount O₂' based on a rotation difference between a target rotation and an actual rotation of the steam turbine. In the step S8, an operation amount O₃' is extracted to achieve the target output value of the steam turbine from the opening-amount command map 109 of the control valve E having been prepared in the step S1. In the step S9, the sum of the operation amounts O₁', O₂' and O₃' is calculated so as to determine the opening amount of the control valve E.

In this manner, the opening-amount command value of the control valve E for the steam turbine 26 is set as a total operation amount obtained by adding the op
Therefore, the opening-amount command value of the control valve B for the power turbine 23 is set as a total operation amount obtained by adding the operation amount O₃' obtained in the feedforward control to the operations amount O₁' and O₂' obtained in the feedback control. By further adding the operation amount O₃' obtained in the feedforward control, the responsiveness of controlling the output of the steam turbine is improved and the fluctuation of the electric frequency is reduced.

In the preferred embodiment, the control valve B is provided as an inflow control valve arranged in such a place that the inflow amount to the power turbine can be directly controlled. Meanwhile, the control valve E is provided as an inflow controlled valve arranged in such a place that the inflow amount to the steam turbine 26 can be directly controlled. With the structure, the output control for the power turbine 23 and the steam turbine 26 can be efficiently achieved, and the inflow thereto can be completely shut off. As a result, it is possible to immediately reduce the power output of the power turbine 23 and the steam turbine 26 when the load within the vessel drops dramatically.

Further, the control valves B and E were explained in the preferred embodiment. However, it is possible to control the opening amount of the control valve C which controls the amount bypassing the power turbine 23, and the control valve F which controls the amount bypassing the steam turbine 26. In such a case, the output of the power turbine 23 and the steam turbine 26 can be precisely controlled.

Furthermore, the example of using the control valve opening-amount map for the control valve B was explained in the preferred embodiment. However, the opening amount can be sequentially calculated by using a calculation model instead of the map.

### [SECOND PREFERRED EMBODIMENT]

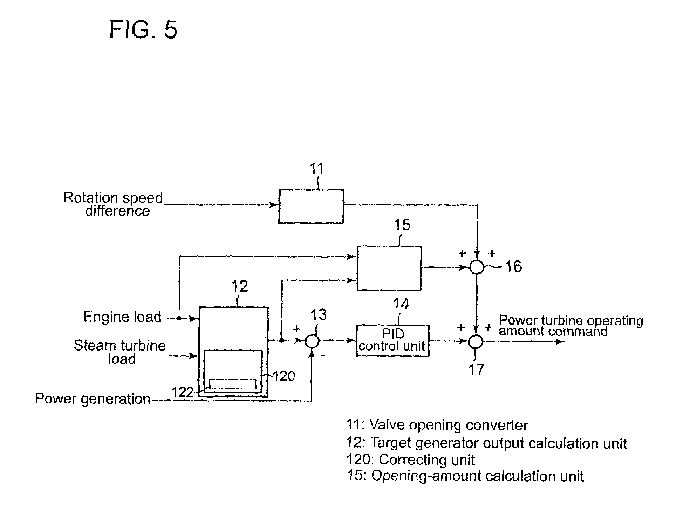

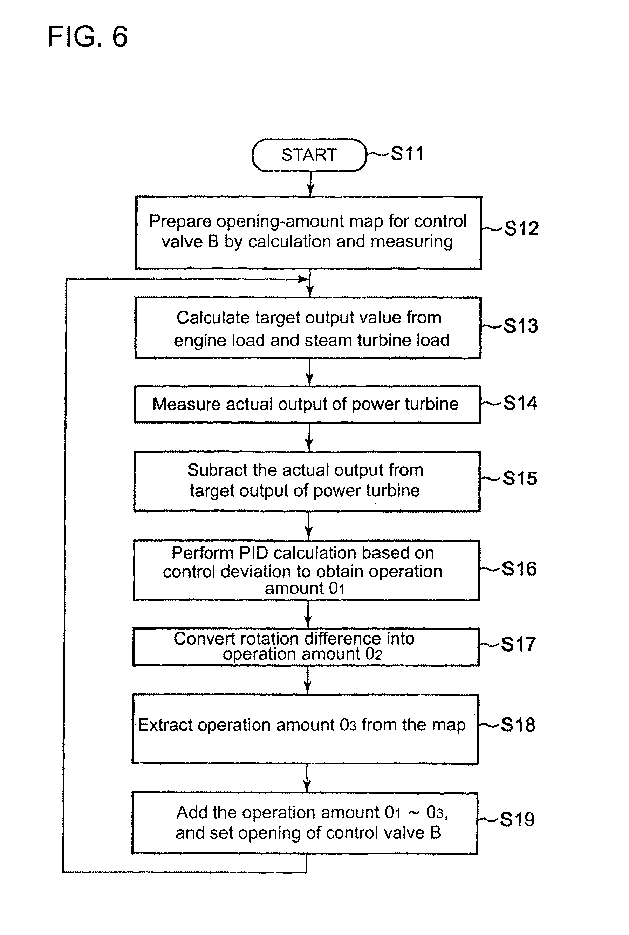

The control logic performed by the control device in the exhaust heat recovery system in relation to the second preferred embodiment is explained in reference to FIG.5 and FIG.6. FIG.5 is a block diagram showing a control logic performed in the exhaust heat recovery system of a second preferred embodiment. FIG.6 is a flow chart showing the control logic of the second preferred embodiment. FIG.5 and FIG.6 illustrate the case about the control valve B for controlling the power generation by the power turbine.

In the second preferred embodiment, control algorithm is established to control the power turbine and the steam turbine in conjunction with each other instead of controlling them independently. In general, steam-type units are slower in response and thus, the steam turbine is operated as a master unit and the power turbine is operated as a slave unit to generate the command for the power turbine.

Specifically, the control logic of FIG.5 starts in a step S11. In a step S12, an opening-amount map of the control valve B is prepared by calculating or measuring such a opening amount of the control valve B that obtains the desired output of the power turbine for each load of the engine. FIG.4 shows opening-amount maps (opening-amount command map for the power turbine) 105 of the control valve B. The opening-amount map of the control valve B is the same as that of the first preferred embodiment shown in FIG.4. However, the calculation of the target output value of the power turbine is different from the first preferred embodiment.

In a step S13, a target generator output calculation unit 12 (ref. FIG.5) calculates the target output value for the steam turbine from the engine load. In the first preferred embodiment, the target output value of the power turbine is calculated from the engine load alone. In contrast, in the second preferred embodiment, the target output value of the power turbine is further corrected in response to the change of the load of the steam turbine. Specifically, the target output value of the power turbine increases as the load of the steam turbine decreases and the output of the power turbine comes down.

Further, a correcting unit (a power turbine target output value correcting unit) 120 for correcting the target output value of the power turbine is provided. The target output value of the power turbine may be corrected by the correcting unit or calculated based on a correction map (correction opening-amount command map for the power turbine) 122 that indicates the relationship among the load of the steam turbine, the engine load and the corrected target output value of the power turbine. The corrected target output value of the power turbine can be easily obtained by using the correction map.

Next, in a step S14, the actual output value of the power turbine is measured. In a step S15, a subtractor 13 (ref. FIG.5) calculates a difference between the target output value of the power turbine and the actual output value of the power turbine. In a step S16, a PID control unit 14 (ref. FIG.5) performs PID calculation based on the difference so as to obtain an operation amount O₁.

In a step S17, a valve opening converter 11 (ref. FIG.5) converts an output signal of the feedback control into an operation amount O₂ based on a rotation difference between a target rotation and an actual rotation of the power turbine. In a step S18, an opening-amount calculation unit 15 (ref. FIG.5) extracts an operation amount O₃ to achieve the corrected target output value of the power turbine from the opening-amount command map of the control valve B having been prepared in the step S11. In a step S19, the sum of the operation amounts O₁, O₂ and O₃ is calculated in adders 16 and 17 (ref. FIG.5) so as to determine the opening amount of the control valve B. After completing the step S19, the process returns to the step S12 to repeat the process.

In the preferred embodiment, the target output value of the power turbine is corrected in response to the change of the load of the steam turbine. Specifically, the opening amount of the control valve is controlled while the load of the steam turbine side is monitored by the power turbine side, and thus the fluctuation of the surplus power can be suppressed by controlling amount of the control valve without monitoring the power turbine side disproportionately.

### INDUSTRIAL APPLICABILITIES

According to the present invention, it is possible to improve the responsiveness of controlling the output of the power turbine and the steam turbine in response to the rapid change of the load within the vessel. Therefore, the present invention is beneficial to be applied to the control device for the exhaust heat recovery system for vessels

## Claims

1. A control device for an exhaust heat recovery system which comprises a power turbine which is driven with use of exhaust gas of an engine, a steam turbine which is driven with use of steam generated by an exhaust gas economizer using the exhaust gas of the engine, and a power generator which is driven by the power turbine and the steam turbine, the control device comprising:
a first control valve mechanism which includes at least one control valve arranged on an upstream side of the power turbine and controlling output value of the power turbine by regulating a flow of the exhaust gas;
a second control valve mechanism which includes at least one control valve arranged on an upstream side of the steam turbine and controlling output value of the steam turbine;
a power turbine controller which controls a total operation amount of the first control valve mechanism; and
a steam turbine controller which controls a total operation amount of the second control valve mechanism, wherein the power turbine controller includes a power turbine feedback control unit which calculates a difference between a target output value of the power turbine calculated from an engine load and an actual output value of the power turbine with use of a PID controller so as to compute a first operation amount of the first control valve mechanism, and a power turbine feedforward control unit which extracts a second operation amount of the first control valve mechanism from a preset opening-amount command map for the power turbine which indicates a relationship among the engine load, the target output value of the power turbine calculated from the engine load and an operation amount of the first control valve mechanism,
wherein the power turbine controller calculates the total operation amount of the first control valve mechanism by adding the first operation amount obtained from the power turbine feedforward control unit and the second operation amount obtained from the power turbine feedback control unit.

2. The control device of the exhaust heat recovery system according to claim 1, wherein the total operation amount of the first control valve mechanism is an opening amount of a flow control valve for controlling an inflow of the exhaust gas to the power turbine.

3. The control device of the exhaust heat recovery system according to claim 1, wherein the total operation amount of the first control valve mechanism is an opening amount of a bypass valve for controlling a flow of the exhaust gas bypassing the power turbine.

4. The control device of the exhaust heat recovery system according to claim 1, wherein the steam turbine controller comprises a steam turbine feedback control unit which calculates a difference between a target output value of the steam turbine calculated from the engine load and an actual output value of the steam turbine with use of a PID controller so as to compute a first operation amount of the second control valve mechanism, and a steam turbine feedforward control unit which extracts a second operation amount of the second control valve mechanism from a preset opening-amount command map for the steam turbine which has a relationship among the engine load, the target output value of the steam turbine calculated from the engine load and an operation amount of the second control valve mechanism,
wherein the steam turbine controller calculates the total operation amount of the second control valve mechanism by adding the first operation amount obtained from the steam turbine feedforward control unit and the second operation amount obtained from the steam turbine feedback.

5. The control device of the exhaust heat recovery system according to claim 4, wherein the total operation amount of the second control valve mechanism is an opening amount of a flow control valve for controlling an inflow of the exhaust gas to the steam turbine.

6. The control device of the exhaust heat recovery system according to claim 4, wherein the total operation amount of the second control valve mechanism is an opening amount of a bypass valve for controlling a flow of the exhaust gas bypassing the steam turbine.

7. The control device of the exhaust heat recovery system according to claim 1, further comprising a power turbine target output value correcting unit for correcting the target output value of the power turbine in accordance with a change of a steam turbine load so as to obtain a corrected target output value of the power turbine, wherein the power turbine feedback control unit and the power turbine feedforward control unit perform calculation based on the corrected target output value of the power turbine

8. The control device of the exhaust heat recovery system according to claim 7, wherein the power turbine target output value correcting device calculates the corrected target output value of the power turbine from the engine load and the steam turbine load, based on a preset correction opening-amount command map for the power turbine which indicates a relationship among the steam turbine load, the engine load and the corrected target output value of the power turbine.
